# FASCICULE DE BREVET EUROPEEN

(11) **EP 1 264 549 B1**
(45) Date de publication et mention de la délivrance du brevet: **27.07.2005**
(21) Numéro de dépôt: 02291278.6
(22) Date de dépôt: 24.05.2002
(51) Int. Cl.: A23N 15/02, B07B 1/24

(54) **Egrappoir à vendange et procédé l'utilisant**
Abbeermaschine für die Weinlese und Verfahren dafür
Stalk separator for the vintage and method for using the same

(30) Priorité: 08.06.2001 FR 0107524
(43) Date de publication de la demande: 11.12.2002
(73) Titulaire: SOMAVI, F-34510 Florensac (FR)
(72) Inventeur: Pera, Didier, 34290 Montblanc (FR); Pera, Jean, 34320 Le Grau d'Agde (FR)
(74) Mandataire: Santarelli

(56) Documents cités:
- FR-A- 1 005 631
- FR-A- 1 288 973
- US-A- 6 029 821

## Description

L'invention a trait aux égrappoirs à vendange.

On sait que le but de ces appareils est de séparer, dans chaque grappe de raisin, les baies (qui sont aussi appelées grains) et la rafle, la vinification devant s'effectuer sur les seules baies.

On connaît déjà des égrappoirs qui comportent un tambour perforé disposé horizontalement et, disposée coaxialement dans ce tambour, une turbine comportant un moyeu, des tiges saillant du moyeu et des ailettes, chacune fixée à l'extrémité libre d'une tige respective, orientées en biais afin d'entraîner la vendange en cours de traitement suivant la direction longitudinale.

Les deux extrémités du tambour sont ouvertes, la vendange pénétrant dans le tambour par l'une des extrémités, les baies détachées des rafles par la turbine quittant le tambour au travers des perforations de celui-ci tandis que les rafles, ainsi d'ailleurs que les éventuelles feuilles et autres éléments étrangers présents dans la vendange brute, sont évacuées par l'autre extrémité du tambour.

Dans ces égrappoirs, les paramètres influant sur la qualité de l'égrappage (qui s'évalue, dans la vendange égrappée, au nombre de baies restées intactes et à l'absence de particules de rafle déchiquetée) sont :
- le débit d'alimentation en vendange ;
- la vitesse de rotation de la turbine ;
- le diamètre des perforations du tambour ; et
- l'orientation des ailettes de la turbine.

Le diamètre des perforations du tambour est bien entendu fixé par construction.

L'orientation des ailettes de la turbine est fixée par construction de la turbine ou lors du montage de cette dernière. En particulier, dans certains égrappoirs où les ailettes sont chacune vissées sur la tige qui la porte, le filetage prévu extérieurement à l'extrémité libre de chaque tige coopère non seulement avec l'alésage ménagé dans l'ailette mais aussi avec un contre-écrou servant à verrouiller l'ailette dans l'orientation voulue.

C'est donc essentiellement les deux paramètres que sont la vitesse de rotation de la turbine et le débit d'alimentation en vendange, qui sont faciles à modifier, que l'on ajuste dans la pratique, lors de l'exploitation d'un égrappoir, afin d'obtenir le meilleur compromis débit d'alimentation-qualité de l'égrappage, en fonction des caractéristiques de la vendange à traiter (diamètre des baies, grosseur des grappes, fragilité, ...), caractéristiques qui dépendent du cépage dont est issue la vendange.

L'invention vise à permettre de mieux adapter les égrappoirs aux changements de caractéristiques de la vendange à traiter, et en particulier aux changements du cépage dont elle est isue.

Elle propose à cet effet un égrappoir à vendange comportant un tambour perforé et, disposée coaxialement dans ledit tambour, une turbine comportant un moyeu, des tiges saillant dudit moyeu et des ailettes chacune fixée à l'extrémité libre d'une tige respective, avec les moyens de fixation entre une tige respective et une ailette qui sont adaptées à permettre un réglage de l'orientation de l'ailette et qui comportent un élément de verrouillage, par serrage, de l'ailette par rapport à ladite tige respective, caractérisé en ce que ledit élément de verrouillage comporte, pour un outil propre à le manoeuvrer, un moyen de prise ayant une disposition et une conformation adaptées à ce que ledit outil puisse accéder audit moyen de prise depuis l'extérieur du tambour à travers une perforation standard de ce dernier.

Ainsi, dans l'égrappoir selon l'invention, l'orientation des ailettes n'est pas définitivement fixée après montage.

Elle peut être modifiée, grâce à la possibilité d'accès de l'outil jusqu'au moyen de prise à travers les perforations standard du tambour, sans qu'il soit besoin de procéder au démontage au moins partiel du tambour ou à celui de la turbine, contrairement à l'égrappoir susmentionné où un tel démontage est indispensable afin d'accéder au contre-écrou qui joue le rôle d'élément de verrouillage.

Cette possibilité de modifier l'orientation des ailettes sans avoir à procéder à un démontage rend intéressant l'ajustement de ce paramètre d'égrappage en sus du débit d'alimentation en vendange et de la vitesse de rotation de la turbine.

La mise en oeuvre de l'opération d'ajustement de l'orientation des ailettes est en effet, dans un égrappoir conforme à l'invention, simple et commode, et donc largement justifiée par l'effet bénéfique que procure cet ajustement sur le compromis débit d'alimentation-qualité de l'égrappage, ce grâce à quoi l'égrappoir selon l'invention offre une capacité pratique particulièrement élevée d'optimisation de ce compromis sur une large variété de cépages.

Selon des caractéristiques préférées, ledit moyen de prise est disposé en bout de ladite ailette.

Le moyen de prise est ainsi en regard et à proximité immédiate de la paroi intérieure du tambour, de sorte que l'outil peut y accéder de façon particulièrement aisée.

Selon d'autres caractéristiques préférées, ledit moyen de prise est une empreinte.

Le moyen de prise étant ainsi de type femelle, l'outil de manoeuvre est de type mâle.

L'on peut donc maximiser la taille de la portion utile du moyen de prise.

De préférence, pour des raisons pratiques de mise en oeuvre, ladite empreinte est prismatique, et notamment hexagonale.

Selon d'autres caractéristiques préférées, comme étant simple, commode et économique, ledit élément de verrouillage est un membre allongé comportant une tête dans laquelle est ménagé ledit moyen de prise.

De préférence, pour des raisons pratiques de mise en oeuvre, ladite ailette comporte un pied d'emboîtement dans un creux ménagé dans l'extrémité libre de ladite tige et ledit membre allongé coopère, à l'opposé de ladite tête, avec un moyen d'expansion dudit pied d'emboîtement ; et en particulier :
- ledit élément de verrouillage est une vis ;
- ledit moyen d'expansion est un écrou coopérant intérieurement avec le filetage de ladite vis et présentant extérieurement une surface latérale tronconique se rétrécissant vers la tête de ladite vis ;
- ledit pied d'emboîtement présente une surface intérieure tronconique de même angle au sommet que la surface latérale dudit écrou tandis que sa surface extérieure est cylindrique à section circulaire, avec une fente qui est pratiquée entre la surface intérieure et la surface extérieure sur une distance prédéterminée à partir de l'extrémité libre dudit pied ; et/ou
- ladite tige présente à son extrémité libre un alésage de même diamètre que le diamètre de la surface extérieure dudit pied d'emboîtement.

Selon d'autres caractéristiques préférées, notamment pour des questions de rationalisation de la fabrication et de mise en oeuvre de l'opération d'ajustement de l'orientation des ailettes, l'égrappoir comporte des moyens de fixation similaires entre plusieurs ailettes et les tiges portant respectivement lesdites plusieurs ailettes, et en particulier toutes les ailettes de ladite turbine coopèrent par des moyens de fixation similaires avec les tiges qui les portent respectivement.

Selon d'autres caractéristiques préférées, notamment pour des raisons de commodité de fixation, chaque dite tige portant une dite ailette est tubulaire.

L'invention vise également, sous un deuxième aspect, un procédé pour égrapper la vendange, caractérisé en ce qu'on utilise un égrappoir tel qu'exposé ci-dessus et en ce qu'en fonction des caractéristiques de ladite vendange, on ajuste l'orientation d'au moins une dite ailette en passant ledit outil au travers d'une perforation standard dudit tambour pour accéder au moyen de prise dudit élément de verrouillage ; en desserrant ledit élément de verrouillage avec ledit outil engagé dans ledit moyen de prise ; en modifiant l'orientation de l'ailette par rapport à la tige en y accédant par lesdites perforations standard dudit tambour ; et en serrant ledit élément de verrouillage avec ledit outil.

Dans un premier mode de réalisation préféré du procédé selon l'invention, on modifie l'orientation de toutes les ailettes dudit égrappoir.

Dans un second mode de réalisation préféré de l'invention, on modifie l'orientation d'uniquement une partie des ailettes dudit égrappoir, et en particulier on modifie uniquement l'orientation des ailettes les plus proches d'une tubulure d'admission que comporte ledit égrappoir, et/ou ladite partie des ailettes dont on modifie l'orientation représente 20 % à 80 % des ailettes de ladite turbine.

On améliore ainsi la simplicité et la commodité de mise en oeuvre de l'opération d'ajustement en n'intervenant que sur les ailettes où cette opération procure un effet significatif.

L'exposé de l'invention sera maintenant poursuivi par la description d'un exemple de réalisation, donnée ci-après à titre illustratif et non limitatif, en référence aux dessins annexés. Sur ceux-ci :
- la figure 1 est une vue schématique en élévation-coupe d'un égrappoir selon l'invention ;
- la figure 2 est un agrandissement partiel d'une portion centrale de la figure 1, sur laquelle sont visibles les ailettes montées au bout de chacune des tiges de la turbine ; et
- la figure 3 est une vue en élévation-coupe prise au niveau d'une des ailettes.

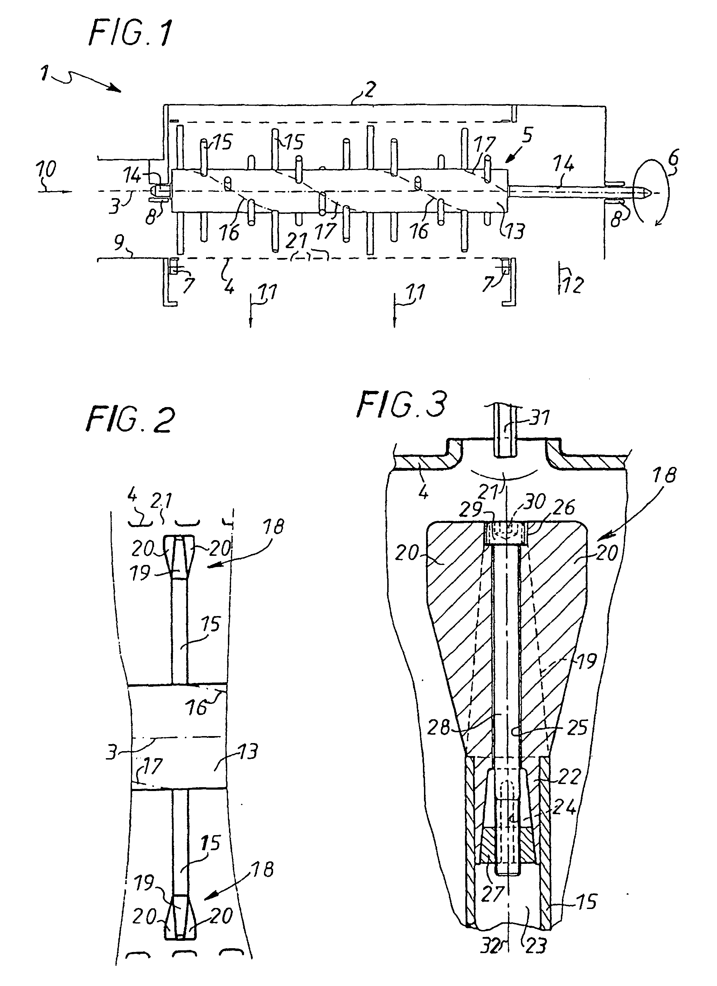

L'égrappoir à vendange 1 illustré schématiquement et partiellement sur la figure 1 présente un carter fixe 2 orienté d'une façon générale suivant un axe horizontal 3, un tambour perforé cylindrique 4 monté à rotation vis-à-vis du carter 2 autour de l'axe 3, une turbine 5 également montée à rotation vis-à-vis du carter 2 autour de l'axe 3 et un moto-réducteur symbolisé par la flèche 6, pour entraîner directement la turbine 5 et pour entraîner également le tambour 4, par l'intermédiaire d'une transmission non représentée, afin que le tambour 4 tourne en sens inverse et à vitesse différente de la turbine 5.

Pour le montage à rotation du tambour 4 vis-à-vis du carter 2, il est prévu plusieurs couples de galets 7 (dont un seul est visible sur la figure 1) montés à rotation sur des membrures solidaires du carter 2, les galets 7 coopérant avec des pistes de roulage situées du côté extérieur à une extrémité et à l'autre du tambour 4.

La turbine 5, qui est disposée coaxialement dans le tambour 4, est portée à chaque extrémité par un palier 8 solidaire du carter 2.

Ce dernier comporte, du côté que l'on voit à gauche sur la figure 1, une tubulure 9 d'admission de la vendange à égrapper, symbolisée par la flèche 10, le reste du carter étant ouvert vers le bas afin de permettre l'évacuation des baies (flèches 11) et des rafles (flèche 12), respectivement sous le tambour 4 et sous la portion du carter que l'on voit à droite du tambour 4.

La turbine 5 comporte un moyeu 13 à chaque extrémité duquel se raccorde un tourillon 14 coopérant avec un palier 8 respectif, le moyeu 13 ayant une surface externe qui est pleine et un diamètre plus grand que celui des tourillons 14.

Sur le moyeu 13 sont implantées des tiges 15 qui s'étendent chacune radialement en saillie à partir du moyeu 13. Les tiges 15 ont toutes la même longueur et sont disposées régulièrement sur le moyeu 13, suivant deux hélices respectives 16 et 17, l'écart angulaire entre deux tiges successives disposées selon une même hélice étant de 45°, chaque tige 15 disposée selon une des hélices étant diamétralement opposée à une tige disposée suivant l'autre hélice.

Comme on le voit plus particulièrement sur la figure 2, à l'extrémité libre de chaque tige 15 est fixée une ailette 18 (non représentée sur la figure 1) comportant un fût 19 ayant une surface extérieure de forme générale tronconique dont le grand diamètre correspond à celui de la surface extérieure de la tige 15, et comportant, de part et d'autre du fût 19, un voile plat respectif 20 qui, entre la tige 15 et le bout de l'ailette 18, présente, à l'opposé du fût 19, une tranche qui diverge d'abord puis qui reste orientée suivant la direction radiale. Les deux voiles 20 d'une même ailette sont coplanaires.

Les ailettes 18 sont orientées en biais, c'est-à-dire que le plan suivant lequel sont disposés les deux voiles 20 n'est ni parallèle ni perpendiculaire à l'axe 3, afin d'entraîner la vendange 10 en cours de traitement à la fois suivant la direction radiale, vers le tambour 4, et suivant la direction longitudinale, c'est-à-dire parallèlement à l'axe 3, vers la droite de la figure 1.

Ainsi, les ailettes 18, qui, en fonctionnement, se déplacent en regard de la paroi interne du tambour 4, entraînent essentiellement la partie de la vendange qui est la plus proche du tambour 4, les baies se détachant des rafles sous l'effet de cet entraînement, les baies détachées passant au travers des perforations 21 du tambour 4, la longueur de celui-ci et de la turbine 5 étant telle qu'à l'extrémité de sortie du tambour 4 (extrémité que l'on voit à droite sur la figure 1), il ne reste plus dans ce dernier que les rafles, l'ensemble des baies ayant quitté le tambour 4 au travers des perforations 21.

L'entraînement en rotation du tambour 4 permet un remélange permanent de la vendange en cours de traitement et vise en particulier à éviter que les rafles et les éventuels éléments étrangers, tels que des feuilles, restent en périphérie tandis que n'aurait pas lieu l'égrappage de la portion de la vendange qui resterait à proximité du moyeu 13.

Chaque ailette 18, en outre du corps formé par le fût 19 et par les voiles 20 comporte, comme on le voit sur la figure 3, un pied d'emboîtement 22 engagé dans un alésage 23 dont est muni la tige 15 au moins à son extrémité libre, le pied d'emboîtement 22 présentant une surface extérieure cylindrique de même diamètre que l'alésage 23, présentant une surface intérieure tronconique se rétrécissant vers le corps 19, 20 et présentant une fente 24 pratiquée entre la surface intérieure et la surface extérieure sur une distance prédéterminée à partir de l'extrémité libre du pied 22.

Du fait que le grand diamètre du fût 19, situé à la jonction entre le corps d'ailette et le pied d'emboîtement 22, correspond au diamètre extérieur de la tige 15 tandis que le diamètre extérieur du pied 22 correspond au diamètre de l'alésage 23, il existe à la jonction entre le pied 22 et le corps 19, 20 un épaulement venant en butée contre la tranche de la tige 15 lorsque le pied d'emboîtement est entièrement enfoncé dans l'alésage 23.

Au centre de l'ailette 18, coaxialement à celle-ci, est ménagé un alésage 25 qui débouche respectivement dans le creux du pied 22 et dans un lamage 26, ce dernier ayant un diamètre légèrement plus grand que celui de l'alésage 25 et étant situé en bout du corps d'ailette 19, 20.

Dans le creux du pied 22 est engagé intérieurement un écrou 27 ayant une surface extérieure tronconique de même angle au sommet que la surface intérieure du pied 22, l'alésage de l'écrou 27 coopérant avec la portion d'extrémité filetée d'une vis 28 dont la tige est disposée dans l'alésage 25 et dont la tête est disposée dans le lamage 26.

On observera que la profondeur du lamage 26 correspond à la longueur de la tête 29 de la vis 28, la tête 29 ne présentant ainsi aucune partie en saillie à l'extérieur de l'ailette 18.

Pour la mise en prise d'un outil de serrage et de desserrage de la vis 28, la tête 29 de cette dernière comporte une empreinte 30, qui est ici prismatique, et plus précisément hexagonale.

L'empreinte 30 est ainsi disposée en bout de l'ailette 18, juste en regard de la paroi interne du tambour 4.

La taille de l'empreinte 30 est telle qu'une clé mâle 31 de même profil est capable de passer à travers les perforations standard 21 du tambour 4.

Ici, la distance entre deux facettes opposées de l'empreinte 30 est de 5 mm tandis que le diamètre des perforations 21 est de 20 mm.

Etant donné, d'une part, qu'à l'état de repos de l'égrappoir 1, il est possible de faire tourner relativement aisément à la main le tambour 4 autour de l'axe 3, si nécessaire en procédant au débrayage de la transmission entre le moto-réducteur 6 et le tambour 4, et, d'autre part, qu'il existe un nombre important de perforations 21 disposées décalées les unes par rapport aux autres suivant la direction périphérique, l'on parvient assez facilement à positionner une des perforations 21 devant l'empreinte 30 de la vis 28 de chacune des ailettes de la turbine 5.

Lorsque l'on serre la vis 28, l'écrou 27 se rapproche du corps d'ailette 19, 20. La coopération entre la surface extérieure de cet écrou et la surface intérieure du pied 22 a pour effet, grâce à la fente 24, de produire une certaine expansion du pied 22 vers l'extérieur, et, par voie de conséquence, d'offrir en fin de serrage un verrouillage entre le pied 22 et la tige 15.

Lorsque la vis 28 est desserrée, la correspondance entre le diamètre externe du pied 22 et le diamètre interne de l'alésage 23 permet de faire tourner l'ailette 18 par rapport à la tige 15 autour de leur axe commun 32, afin de régler l'orientation de l'ailette 18.

Cette orientation est initialement réglée lors de l'assemblage de la turbine et peut ensuite être modifiée sans démontage du tambour 4 ou de la turbine 5 puisque le desserrage de la vis 28, la rotation de l'ailette 18 par rapport à la tige 15 autour de l'axe 32 puis le serrage de la vis 28 afin de verrouiller l'ailette 18 par rapport à la tige 15, peuvent s'effectuer au travers des perforations 21 du tambour 4.

L'égrappoir 1 offre ainsi la possibilité de mettre en oeuvre de façon simple et commode un ajustement de l'orientation des ailettes 18, afin d'adapter au mieux les paramètres d'égrappage aux caractéristiques de la vendange 10 à traiter.

On notera que les ailettes 18 qui sont proches de la tubulure d'admission 9 coopèrent avec des grappes de raisin dont la majorité des baies est encore rattachée à la rafle tandis que les ailettes les plus éloignées de la tubulure 9 coopèrent avec des rafles auxquelles plus aucune ou pratiquement plus aucune baie n'est rattachée.

On a donc intérêt, à proximité de la tubulure d'admission 9, à incliner les ailettes 18 relativement modérément, c'est-à-dire à les disposer de sorte que le plan des voiles 20 soit relativement proche d'un plan transversal à l'axe 3, tandis que l'on a intérêt à incliner de façon relativement importante les ailettes les plus éloignées de la tubulure d'admission 9.

Dans l'égrappoir 1, les tiges 15 et les ailettes 18 sont toutes identiques.

Lorsque l'on désire ajuster les paramètres d'égrappage à une vendange provenant d'un cépage différent, l'on ajuste l'orientation de chacune des ailettes 18.

En variante, plutôt que d'ajuster l'orientation de l'ensemble des ailettes, seule l'orientation des ailettes les plus proches de la tubulure d'admission 9 est modifiée, le nombre des ailettes sur lesquelles on procède à la modification étant fonction de l'amplitude de la variation des caractéristiques de la vendange, la modification étant par exemple effectuée sur 80 % des ailettes à partir de la tubulure 9 lorsque la variation des caractéristiques est importante tandis que la variation n'est effectuée que sur 20 % des ailettes lorsqu'il y a peu de modifications.

Dans une variante non représentée de l'égrappoir 1, les ailettes les plus éloignées de la tubulure d'admission 9 sont fixées de manière définitive sur les tiges 15 (leur orientation n'est pas réglable), seules les autres ailettes, par exemple les 80 % les plus proches de la tubulure d'admission 9, étant montées sur les tiges 15 comme illustré sur la figure 3.

Dans d'autres variantes non représentées, les moyens de fixation entre une ailette et la tige qui la porte sont différents, l'empreinte 30 étant remplacée par une empreinte ayant une autre forme, notamment à profil en étoile ou une simple fente ; l'empreinte 30 est remplacée par un moyen de prise mâle ; ou encore la vis 28 est remplacée par un autre type d'élément de verrouillage, notamment par un membre allongé semblable à la vis 28 mais comportant à la place du filetage servant à coopérer avec l'écrou 27, une came permettant d'effectuer le verrouillage par rotation notamment sur un quart de tour.

De nombreuses autres variantes sont possibles en fonction des circonstances et on rappelle à cet égard que l'invention ne se limite pas aux exemples décrits et représentés.

## Revendications

1. Egrappoir à vendange comportant un tambour perforé (4) et, disposée coaxialement dans ledit tambour, une turbine (5) comportant un moyeu (13), des tiges (15) saillant dudit moyeu (13) et des ailettes (18) chacune fixée à l'extrémité libre d'une tige respective (15), avec les moyens de fixation entre une tige respective (15) et une ailette (18) qui sont adaptées à permettre un réglage de l'orientation de l'ailette (18) et qui comportent un élément de verrouillage, par serrage, de l'ailette (18) par rapport à ladite tige respective (15), **caractérisé en ce que** ledit élément de verrouillage (28) comporte, pour un outil (31) propre à le manoeuvrer, un moyen de prise (30) ayant une disposition et une conformation adaptées à ce que ledit outil (31) puisse accéder audit moyen de prise (30) depuis l'extérieur du tambour (4) à travers une perforation standard (21) de ce dernier.

2. Egrappoir selon la revendication 1, **caractérisé en ce que** ledit moyen de prise (30) est disposé en bout de ladite ailette (18).

3. Egrappoir selon l'une quelconque des revendications 1 ou 2, **caractérisé en ce que** ledit moyen de prise est une empreinte (30).

4. Egrappoir selon la revendication 3, **caractérisé en ce que** ladite empreinte (30) est prismatique.

5. Egrappoir selon la revendication 4, **caractérisé en ce que** ladite empreinte est hexagonale.

6. Egrappoir selon l'une quelconque des revendications 1 à 5, **caractérisé en ce que** ledit élément de verrouillage est un membre allongé (28) comportant une tête (29) dans laquelle est ménagé ledit moyen de prise (30).

7. Egrappoir selon la revendication 6, **caractérisé en ce que** ladite ailette (18) comporte un pied d'emboîtement (22) dans un creux (23) ménagé dans l'extrémité libre de ladite tige (15) et **en ce que** ledit membre allongé (28) coopère, à l'opposé de ladite tête (29), avec un moyen d'expansion (27) dudit pied d'emboîtement (22).

8. Egrappoir selon la revendication 7, **caractérisé en ce que** :
- ledit élément de verrouillage est une vis (28) ;
- ledit moyen d'expansion est un écrou (27) coopérant intérieurement avec le filetage de ladite vis (28) et présentant extérieurement une surface latérale tronconique se rétrécissant vers la tête (29) de ladite vis ;
- ledit pied d'emboîtement (22) présente une surface intérieure tronconique de même angle au sommet que la surface latérale dudit écrou (27) tandis que sa surface extérieure est cylindrique à section circulaire, avec une fente (24) qui est pratiquée entre la surface intérieure et la surface extérieure sur une distance prédéterminée à partir de l'extrémité libre dudit pied (22); et
- ladite tige présente à son extrémité libre un alésage (23) de même diamètre que le diamètre de la surface extérieure dudit pied d'emboîtement (22).

9. Egrappoir selon l'une quelconque des revendications 7 ou 8, **caractérisé en ce que** ladite ailette (18) comporte, en outre dudit pied d'emboîtement (22), un corps (19, 20) dans lequel est ménagé un alésage central débouchant respectivement dans ledit creux (23) du pied d'emboîtement (22) et dans un lamage (26) situé en bout du corps d'ailette (19, 20), ledit membre allongé (28) ayant une tige disposée dans ledit alésage (25) et ayant ladite tête (29) disposée dans ledit lamage (26).

10. Egrappoir selon la revendication 9, **caractérisé en ce que** la profondeur dudit lamage (26) correspond à la longueur de ladite tête (29).

11. Egrappoir selon l'une quelconque des revendications 9 ou 10, **caractérisé en ce que** ladite ailette (18) présente un épaulement à la jonction entre ledit corps d'ailette (19, 20) et ledit pied d'emboîtement (22), ledit épaulement venant en butée contre la tranche d'extrémité de ladite tige (15).

12. Egrappoir selon l'une quelconque des revendications 1 à 11, **caractérisé en ce que** ladite ailette (18) présente un corps formé d'un fût tronconique (19) et de deux voiles plats (20) respectivement disposés d'un côté et de l'autre dudit fût (19) et orientés suivant un même plan.

13. Egrappoir selon la revendication 12, **caractérisé en ce que** chaque dit voile (20) présente, à l'opposé dudit fût (19), une tranche qui diverge d'abord puis qui reste orientée suivant la direction radiale.

14. Egrappoir selon l'une quelconque des revendications 1 à 13, **caractérisé en ce qu'**il comporte des moyens de fixation similaires (22, 23, 27, 28) entre plusieurs ailettes (18) et les tiges (15) portant respectivement lesdites plusieurs ailettes.

15. Egrappoir selon l'une quelconque des revendications 1 à 14, **caractérisé en ce que** toutes les ailettes (18) de ladite turbine (15) coopèrent par des moyens de fixation similaires (22, 23, 27, 28) avec les tiges (15) qui les portent respectivement.

16. Egrappoir selon l'une quelconque des revendications 1 à 15, **caractérisé en ce que** chaque dite tige (15) portant une dite ailette (18) est tubulaire.

17. Procédé pour égrapper la vendange, **caractérisé en ce qu'**on utilise un égrappoir selon l'une quelconque des revendications 1 à 16 et **en ce qu'**en fonction des caractéristiques de ladite vendange, on ajuste l'orientation d'au moins une dite ailette (18) en passant ledit outil (31) au travers d'une perforation standard (21) dudit tambour (4) pour accéder au moyen de prise (30) dudit élément de verrouillage (28); en desserrant ledit élément de verrouillage avec ledit outil engagé dans ledit moyen de prise ; en modifiant l'orientation de l'ailette (18) par rapport à la tige (15) en y accédant par lesdites perforations standard (21) dudit tambour (4); et en serrant ledit élément de verrouillage avec ledit outil.

18. Procédé selon la revendication 17, **caractérisé en ce qu'**on modifie l'orientation de toutes les ailettes (18) dudit égrappoir.

19. Procédé selon la revendication 17, **caractérisé en ce qu'**on modifie l'orientation d'uniquement une partie des ailettes (18) dudit égrappoir.

20. Procédé selon la revendication 19, **caractérisé en ce qu'**on modifie uniquement l'orientation des ailettes les plus proches d'une tubulure d'admission (9) que comporte ledit égrappoir.

21. Procédé selon l'une quelconque des revendications 19 ou 20, **caractérisé en ce que** ladite partie des ailettes dont on modifie l'orientation représente 20 % à 80 % des ailettes de ladite turbine (15).

## Patentansprüche

1. Abbeermaschine für die Weinlese, mit einer perforierten Trommel (4) und einer Turbine (5), die in der Trommel koaxial angeordnet ist und eine Nabe (13), von der Nabe (13) vorstehende Stifte (15) sowie Schaufeln (18), wovon jede am freien Ende eines entsprechenden Stifts (15) befestigt ist, umfasst, wobei zwischen einem entsprechenden Stift (15) und einer Schaufel (18) Befestigungsmittel vorhanden sind, die eine Einstellung der Orientierung der Schaufel (18) ermöglichen können und ein Element zum Verriegeln durch Klemmen der Schaufel (18) in Bezug auf den entsprechenden Stift (15) aufweisen, **dadurch gekennzeichnet, dass** das Verriegelungselement (28) für ein Werkzeug (31), das es betätigen kann, ein Eingreifmittel (30) umfasst, das eine Anordnung und eine Beschaffenheit besitzt, derart, dass das Werkzeug (31) auf das Eingreifmittel (30) von außerhalb der Trommel (4) durch eine Standardperforation (31) dieser letzteren zugreifen kann.

2. Abbeermaschine nach Anspruch 1, **dadurch gekennzeichnet, dass** das Eingreifmittel (30) am Ende der Schaufel (18) angeordnet ist.

3. Abbeermaschine nach einem der Ansprüche 1 oder 2, **dadurch gekennzeichnet, dass** das Eingreifmittel eine Vertiefung (30) ist.

4. Abbeermaschine nach Anspruch 3, **dadurch gekennzeichnet, dass** die Vertiefung (30) prismenförmig ist.

5. Abbeermaschine nach Anspruch 4, **dadurch gekennzeichnet, dass** die Vertiefung sechseckig ist.

6. Abbeermaschine nach einem der Ansprüche 1 bis 5, **dadurch gekennzeichnet, dass** das Verriegelungselement ein lang gestrecktes Element (28) ist, das einen Kopf (29) aufweist, in dem das Eingreifmittel (30) ausgespart ist.

7. Abbeermaschine nach Anspruch 6, **dadurch gekennzeichnet, dass** die Schaufel (18) in einem im freien Ende des Stifts (15) ausgesparten Hohlraum (23) einen Einpassfuß (22) aufweist und dass das lang gestreckte Element (28) gegenüber dem Kopf (29) mit einem Mittel (27) zum Ausdehnen des Einpassfußes (22) zusammenwirkt.

8. Abbeermaschine nach Anspruch 7, **dadurch gekennzeichnet, dass**:
- das Verriegelungselement eine Schraube (28) ist;
- das Ausdehnungsmittel eine Mutter (27) ist, die innen mit dem Gewinde der Schraube (28) zusammenwirkt und außen eine kegelstumpfförmige seitliche Oberfläche aufweist, die zum Kopf (29) der Schraube konisch zuläuft;
- der Einpassfuß (22) eine kegelstumpfförmige innere Oberfläche mit dem gleichen Kegelwinkel wie die seitliche Oberfläche der Mutter (27) aufweist, während seine äußere Oberfläche zylindrisch mit kreisförmigem Querschnitt ist, wobei zwischen der inneren Oberfläche und der äußeren Oberfläche über eine vorgegebene Strecke ein am freien Ende des Fußes (22) beginnender Schlitz (24) ausgebildet ist; und
- der Stift an seinem freien Ende eine Bohrung (23) mit dem gleichen Durchmesser wie die äußere Oberfläche des Einpassfußes (22) aufweist.

9. Abbeermaschine nach einem der Ansprüche 7 oder 8, **dadurch gekennzeichnet, dass** die Schaufel (18) außer dem Einpassfuß (22) einen Körper (19, 20) aufweist, in dem eine Mittelbohrung ausgebildet ist, die in dem Hohlraum (23) des Einpassfußes (22) bzw. in eine am Ende des Schaufelkörpers (19, 20) befindliche Einsenkung mündet, wobei das lang gestreckte Element (28) einen Stift besitzt, der in der Bohrung (25) angeordnet ist, und der Kopf (29) in der Einsenkung (26) angeordnet ist.

10. Abbeermaschine nach Anspruch 9, **dadurch gekennzeichnet, dass** die Tiefe der Einsenkung (26) der Länge des Kopfes (29) entspricht.

11. Abbeermaschine nach einem der Ansprüche 9 oder 10, **dadurch gekennzeichnet, dass** die Schaufel (18) am Übergang zwischen dem Schaufelkörper (19, 20) und dem Einpassfuß (22) eine Schulter aufweist, die an der Stirnfläche des Stifts (15) anliegt.

12. Abbeermaschine nach einem der Ansprüche 1 bis 11, **dadurch gekennzeichnet, dass** die Schaufel (18) einen Körper aufweist, der aus einem kegelstumpfförmigen Schaft (19) und aus zwei ebenen Blättern (20), die beiderseits des Schaftes (19) angeordnet und in derselben Ebene orientiert sind, aufweist.

13. Abbeermaschine nach Anspruch 12, **dadurch gekennzeichnet, dass** das Blatt (20) gegenüber dem Schaft (19) eine Stirnfläche aufweist, die erst auseinander läuft und dann ihre Orientierung in radialer Richtung beibehält.

14. Abbeermaschine nach einem der Ansprüche 1 bis 13, **dadurch gekennzeichnet, dass** sie zwischen mehreren Schaufeln (18) und Stiften (15), die die entsprechenden mehreren Schaufeln tragen, ähnliche Befestigungsmittel (22, 23, 27, 28) umfasst.

15. Abbeermaschine nach einem der Ansprüche 1 bis 14, **dadurch gekennzeichnet, dass** die Schaufeln (18) der Turbine (15) über ähnliche Befestigungsmittel (22, 23, 27, 28) mit den Stiften (15), die sie jeweils tragen, zusammenwirken.

16. Abbeermaschine nach einem der Ansprüche 1 bis 15, **dadurch gekennzeichnet, dass** jeder Stift (15), der eine Schaufel (18) trägt, rohrförmig ist.

17. Verfahren zum Abbeeren der Trauben, **dadurch gekennzeichnet, dass** eine Abbeermaschine nach einem der Ansprüche 1 bis 16 verwendet wird und dass in Abhängigkeit von den Eigenschaften der Trauben die Orientierung wenigstens einer Schaufel (18) eingestellt wird, indem das Werkzeug (31) durch eine Standardperforation (21) der Trommel (4) geführt wird, um auf das Eingreifmittel (30) des Verriegelungselements (28) zuzugreifen; indem die Klemmung zwischen dem Verriegelungselement und dem Werkzeug, das in dem Eingreifmittel in Eingriff ist, gelöst wird; indem die Orientierung der Schaufel (18) in Bezug auf den Stift (15), auf den durch die Standardperforationen (21) der Trommeln (4) zugegriffen wird, geändert wird; und indem das Verriegelungselement mit dem Werkzeug festgeklemmt wird.

18. Verfahren nach Anspruch 17, **dadurch gekennzeichnet, dass** die Orientierung aller Schaufeln (18) der Abbeermaschine geändert wird.

19. Verfahren nach Anspruch 17, **dadurch gekennzeichnet, dass** die Orientierung nur eines Teils der Schaufeln (18) der Abbeermaschine geändert wird.

20. Verfahren nach Anspruch 19, **dadurch gekennzeichnet, dass** nur die Orientierung jener Schaufeln geändert wird, die am nächsten bei einer Einlassrohrleitung (9), die die Abbeermaschine aufweist, angeordnet sind.

21. Verfahren nach einem der Ansprüche 19 oder 20, **dadurch gekennzeichnet, dass** der Anteil der Schaufeln, deren Orientierung geändert wird, 20 % bis 80 % der Schaufeln der Turbine (15) repräsentiert.

## Claims

1. Stalk separator for harvested grapes, including a perforated drum (4) and, disposed coaxially in said drum, a turbine (5) including a hub (13), rods (15) projecting from said hub (13) and fins (18) each fixed to the free end of a respective rod (15) with fixing means between a fin (18) and a respective rod (15) that are adapted to allow adjustment of the orientation of the fin (18) and include a locking member for clamping said fin (18) relative to said respective rod (15), which stalk separator is **characterized in that** said locking member (28) includes engagement means (30) for a tool (31) for maneuvering it, said engagement means (30) having a disposition and a conformation such that said tool (31) can access said engagement means (30) from the exterior of the drum (4) through one of the usual perforations (21) therein.

2. Stalk separator according to claim 1, **characterized in that** said engagement means (30) are disposed at the end of said fin (18).

3. Stalk separator according to either claim 1 or claim 2, **characterized in that** said engagement means comprise an imprint (30).

4. Stalk separator according to claim 3, **characterized in that** said imprint (30) is prism-shaped.

5. Stalk separator according to claim 4, **characterized in that** said imprint is hexagonal.

6. Stalk separator according to any one of claims 1 to 5, **characterized in that** said locking member is an elongate member (28) having a head (29) in which said engagement means (30) are formed.

7. Stalk separator according to claim 6, **characterized in that** said fin (18) includes a foot (22) nesting in a recess (23) formed in the free end of said rod (15) and said elongate member (28) cooperates at the end opposite said head (29) with means (27) for expanding said nesting foot (22).

8. Stalk separator according to claim 7, **characterized in that**:
- said locking member is a screw (28);
- said expansion means is a nut (27) cooperating internally with the thread of said screw (28) and having externally a frustoconical lateral surface tapering toward the head (29) of said screw;
- said nesting foot (22) has a frustoconical interior surface with the same angle at the apex as the lateral surface of said nut (27) and a cylindrical exterior surface of circular section with a slot (24) formed between the interior surface and the exterior surface over a predetermined distance from the free end of said foot (22); and
- said rod has at its free end a bore (23) the same diameter as the exterior surface of said nesting foot (22).

9. Stalk separator according to either claim 7 or claim 8, **characterized in that** said fin (18) further includes, in addition to said nesting foot (22), a body (19, 20) in which is formed a central bore discharging in said recess (23) of the nesting foot (22) and in a countersink (26) situated at the end of the fin body (19, 20), said elongate member (28) having a rod disposed in said bore (25) and having said head (29) disposed in said countersink (26).

10. Stalk separator according to claim 9, **characterized in that** the depth of said countersink (26) corresponds to the length of said head (29).

11. Stalk separator according to either claim 9 or claim 10, **characterized in that** said fin (18) has a shoulder at the junction between said fin body (19, 20) and said nesting foot (22) and said shoulder abuts against the edge surface at the end of said rod (15).

12. Stalk separator according to any one of claims 1 to 11, **characterized in that** said fin (18) has a body formed of a frustoconical shank (19) and two flat webs (20) disposed on respective opposite sides of said shank (19) and oriented in a common plane.

13. Stalk separator according to claim 12, **characterized in that** each of said webs (20) has on the side opposite said shank (19) an edge surface that initially diverges and then continues in the radial direction.

14. Stalk separator according to any one of claims 1 to 13, **characterized in that** it includes similar fixing means (22, 23, 27, 28) between several of said fins (18) and the respective rods (15) carrying said several fins.

15. Stalk separator according to any one of claims 1 to 14, **characterized in that** all the fins (18) of said turbine (15) cooperate by way of similar fixing means (22, 23, 27, 28) with the respective rods (15) that carry them.

16. Stalk separator according to any one of claims 1 to 15, **characterized in that** each rod (15) carrying one of said fins (18) is tubular.

17. Method of stalk separating harvested grapes, **characterized in that** a stalk separator according to any one of claims 1 to 16 is used and the orientation of at least one of said fins (18) is adjusted as a function of the characteristics of said harvested grapes by passing said tool (31) through one of the usual perforations (21) of said drum (4) to access the engagement means (30) of said locking member (28), loosening said locking member with said tool engaged in said engagement means, modifying the orientation of the fin (18) relative to the rod (15), obtaining access thereto via said usual perforations (21) of said drum (4), and tightening said locking member with said tool.

18. Method according to claim 17, **characterized in that** the orientation of all the fins (18) of said stalk separator is modified.

19. Method according to claim 17, **characterized in that** the orientation of only some of the fins (18) of said stalk separator is modified.

20. Method according to claim 19, **characterized in that** the orientation of only the fins nearest an inlet pipe (9) of said stalk separator is modified.

21. Method according to either claim 19 or claim 20, **characterized in that** the fins whose orientation is modified represent from 20% to 80% of the fins of said turbine (18).
